# EUROPEAN PATENT SPECIFICATION

(11) **EP 3 351 435 B1**
(45) Date of publication and mention of the grant of the patent: **07.08.2019**
(21) Application number: 18152504.9
(22) Date of filing: 19.01.2018
(51) Int. Cl.: B60R 21/205

(54) **AIR BAG FOR OBLIQUE CRASH PROTECTION**
AIRBAG FÜR SCHRÄGE KOLLISIONEN
COUSSIN DE SÉCURITÉ GONFLABLE FRONTAL POUR PROTECTION CONTRE LES COLLISIONS OBLIQUES

(30) Priority: 24.01.2017 US 201715413704
(43) Date of publication of application: 25.07.2018
(73) Proprietor: TRW VEHICLE SAFETY SYSTEMS INC., Washington, MI 48094 (US)
(72) Inventor: Fischer, Kurt F., Leonard, MI, 48367 (US); Adler, Angelo, Washington, MI, 48095 (US); Schroeder, Alexandra E., Lenox, MI, 48050 (US)
(74) Representative: ZF TRW Patentabteilung

(56) References cited:
- JP-A- 2015 157 602
- JP-A- 2016 107 730
- US-A1- 2016 046 257
- US-A1- 2016 207 490

## Description

### Technical Field

The invention relates to vehicle safety systems. More particularly, the invention relates to an inflatable vehicle occupant protection device for helping to protect an occupant of a vehicle. Still more particularly, the invention relates to an inflatable vehicle occupant protection device for helping to protect an occupant of a driver seat of the vehicle.

### Background

It is known to provide an inflatable vehicle occupant protection device, such as an air bag, for helping to protect an occupant of a vehicle. Air bags are deployable in response to the occurrence of an event for which occupant protection is desired, such as an impact to the vehicle, a vehicle collision, a vehicle rollover, or a combination thereof. Frontal collisions refer to collision events in which a vehicle experiences an impact at the front of the vehicle. These frontal collisions cause front seat vehicle occupants to move forward in the vehicle toward structures, such as the steering wheel (driver side occupant) and/or the instrument panel (passenger side occupant).

Frontal collisions of a vehicle can occur as a result of the vehicle travelling forward into an object, such as another vehicle, a tree, a pole, etc. Frontal collisions can also occur as a result of a stationary vehicle being impacted at the front by another vehicle. Frontal collisions can further occur as a result of two or more moving vehicles moving toward each other in a "head on" impact.

To help protect occupants of vehicles involved in frontal collisions, the vehicle can be equipped with frontal air bags. On the passenger side of the vehicle, frontal air bags are typically deployed from a housing located within the instrument panel of the vehicle. Because the occupant on the passenger side is not charged with operating the vehicle, the passenger frontal air bag can be configured to cover a large area in front of the front passenger seat, i.e., the instrument panel, windshield, etc., and can extend laterally, in both outboard and inboard directions in the vehicle, for example, from adjacent the passenger door to the centerline of the instrument panel or beyond.

On the driver side of the vehicle, frontal air bags are typically deployed from a housing located within the steering wheel. Because the occupant on the driver side is charged with operating the vehicle, the driver frontal air bag has to be configured with this in mind. For example, the operator may not be steering the vehicle in a straight forward direction at the time of the collision and, therefore, the steering wheel can be rotated when the air bag deploys. Because of this, steering wheel mounted air bags typically have a round/circular cushion configuration that coincides with the position and attitude of the steering wheel. Additionally, the driver frontal air bag must be configured taking into account that the operator of the vehicle will likely have one or both hands on the steering wheel at the time a collision takes place. Because of this, the steering wheel mounted air bag can be configured to have a diameter that is selected to provide adequate frontal impact protection while avoiding air bag deployment into contact with the operator's hands and arms.

One particular type of collision for which an air bag may be deployed can be referred to as an oblique collision. Oblique collisions are considered generally to be any non-frontal, i.e., any non-zero degree angle, vehicle collision. In its simplest form, a frontal, zero degree angle vehicle collision would involve a vehicle impacting, for example, a flat brick wall when the vehicle is travelling at a straight forward direction perpendicular to that wall. As a result of this impact, the occupant would move forward in a direction parallel to the vehicle axis and the direction of forward vehicle travel into contact with the deployed air bag. From this, it follows that an oblique collision, i.e., a non-frontal or non-zero angle collision, would be any collision scenario that results in the occupant moving relative to the central vehicle axis and direction of forward vehicle travel in a direction that is not parallel to the axis of straight forward vehicle travel.

Oblique collisions can occur in a variety of scenarios. For example, a vehicle travelling in a straight forward direction colliding with an angled surface, such as another vehicle oriented in a non-parallel manner, would be considered an oblique collision. As another example, an offset collision in which a vehicle collides with an object, such as another vehicle, that is offset laterally would be considered an oblique collision. This would be the case, for instance, in a vehicle collision in which the front passenger side bumper strikes the rear driver side bumper of another vehicle. As a further example, vehicles colliding when travelling in directions that are not parallel, i.e., at an angle, would be considered an oblique collision.

Additionally, in oblique collision scenarios causing forward-inboard movement of a seatbelt restrained occupant, whether a driver seat occupant or a passenger seat occupant, the movement of the occupant is in a direction that escapes the shoulder belt portion of the seatbelt. By "escapes," it is meant to refer to the fact that the shoulder belt restraint extends downward and inward from the outboard shoulder across the torso and around the inboard hip. This being the case, forward-inboard occupant movement can cause the occupant's torso to slip out from behind the shoulder belt, thereby becoming partially unbelted or unrestrained.

Because the size and extent of the steering wheel air bag is limited, the occurrence of an oblique collision presents unique challenges from an occupant safety perspective. This is because an oblique collision produces occupant movements in the vehicle that are also oblique, that is, the occupant moves obliquely relative to a central axis of the steering wheel and steering wheel mounted air bag. This movement can be forward-outboard (i.e., toward the door) or forward-inboard (i.e., toward the vehicle centerline). Forward-outboard movement of a driver seat occupant in response to an oblique collision can be handled through the deployment of known side or lateral air bag structures, such as side curtains, door mounted side air bags, seat mounted side air bags, pillar mounted side air bags. Conventional air bag structures do not, however, cover for forward-inboard movement of a driver seat occupant. Additionally, forward-inboard moving occupants can escape the shoulder belt portion of the seatbelt, which presents further challenges.

A vehicle safety system covering such a forward inboard movement is disclosed by JP 2015 157602 A wherein the vehicle safety system comprises a driver airbag, a passenger airbag and a center airbag. To prevent inboard rotation in response to an impact in an oblique direction of a driver side seated occupant the center airbag is stabilized by the passenger airbag in the inflated state.

### Summary

The invention relates to vehicle safety systems. More particularly, the invention relates to an inflatable vehicle occupant protection device for helping to protect an occupant of a vehicle. Still more particularly, the invention relates to an inflatable vehicle occupant protection device for helping to protect an occupant of a driver seat of the vehicle.

According to one aspect, a vehicle safety system includes an oblique air bag configured to be mounted at a mounting location in the vehicle. The oblique air bag is configured to be inflated between an instrument panel of the vehicle and an occupant of a front driver side seat of the vehicle. The oblique air bag includes a support leg that extends away from the mounting location along the instrument panel and has a portion positioned behind a steering wheel of the vehicle. An occupant cushioning leg is configured to extend rearward in the vehicle from the support leg on an inboard side of the vehicle steering wheel. The cushioning leg extends adjacent a steering wheel mounted frontal air bag and extending rearward in the vehicle beyond the rearward extent of the frontal air bag.

According to another aspect, the cushioning leg can engage an inboard positioned portion of the frontal air bag. The cushioning leg can be configured to distort the portion of the frontal air bag with which it engages and move the portion of the frontal air bag with which it engages in an outboard direction.

According to another aspect, the oblique air bag and the frontal air bag can be configured to exert forces against each other so as to form a contiguous inflated body extending across the steering wheel and inboard of the steering wheel rearward in the vehicle adjacent the front driver side seat.

According to another aspect, the oblique air bag and the frontal air bag can be configured to form a contiguous inflated body extending across the steering wheel and inboard of the steering wheel rearward in the vehicle adjacent the front driver side seat, with the steering wheel and the instrument panel in combination forming a reaction surface across their lateral extents in the vehicle.

According to another aspect, the cushioning leg can be configured to extend rearward of the frontal air bag and to engage the frontal air bag so as to form a pocket for receiving the occupant.

According to another aspect, the cushioning leg can have a tapered configuration with a wide base portion configured to be positioned proximate the instrument panel. The width of the cushioning leg can narrow as it extends rearward of the instrument panel.

According to another aspect, the cushioning leg can have an outboard wall presented toward the driver seat and an inboard wall presented away from the driver seat. The inboard wall can extend diagonally away from the instrument panel in a direction that is rearward in the vehicle and outboard of the vehicle so as to converge with the outboard wall.

According to another aspect, the cushioning leg can include an inboard wall presented away from the driver seat occupant. The inboard wall can extend from adjacent the instrument panel rearward in the vehicle and at an angle directed outboard of the driver side of the vehicle. The inboard wall can be configured to become rigid when the air bag is inflated so as to resist inboard pivotal/rotational movement of the cushioning leg in response to an occupant impacting the cushioning leg.

According to another aspect, the mounting location can be in the instrument panel adjacent a steering column of the vehicle. The support leg of the oblique air bag can extend away from the mounting location toward a longitudinal centerline of the vehicle.

According to another aspect, the mounting location can be on a steering column of the vehicle. The support leg of the oblique air bag can extend away from the mounting location toward a longitudinal centerline of the vehicle.

According to another aspect, the oblique air bag can be configured to resist inboard rotation in response to occupant impacts in an oblique direction.

According to another aspect, can also include a housing for mounting the oblique air bag in the vehicle. The housing can be configured to fix a first end portion of the support leg to the vehicle. The support leg can be configured to extend away from the housing along the instrument panel so that the housing anchors the oblique air bag to the vehicle and the instrument panel forms a reaction surface that blocks inboard rotation of the oblique air bag in response to occupant impacts in an oblique direction.

According to another aspect, the oblique air bag can include a notch configured to receive a steering wheel rim portion of the steering wheel. The notch can be to use the steering wheel as a reaction surface for supporting the oblique air bag against impact forces with the oblique air bag.

### DRAWINGS

Fig. 1 is a schematic illustration of a vehicle including a safety system for helping to protect an occupant of the vehicle.
Fig. 2 is a schematic illustration of the vehicle safety system of Fig. 1 in a first deployed condition.
Fig. 3 is a schematic illustration of the vehicle safety system of Fig. 1 in a second deployed condition, according to a first example configuration.
Fig. 4 is a schematic illustration of the vehicle safety system of Fig. 1 in a second deployed condition, according to a second example configuration.
Fig. 5 is a schematic illustration of the vehicle safety system of Fig. 1 in a second deployed condition, according to a third example configuration.

### Description

The invention relates to an air bag that helps protect an occupant of a driver seat of a vehicle in the event of an oblique collision. Those skilled in the art will appreciate that the invention could be adapted structurally to help protect occupants of other seating positions in the vehicle, such as front passenger seat occupants or rear seat occupants. The air bag disclosed herein is, however, intended primarily to help protect the vehicle operator positioned in the driver seat of the vehicle.

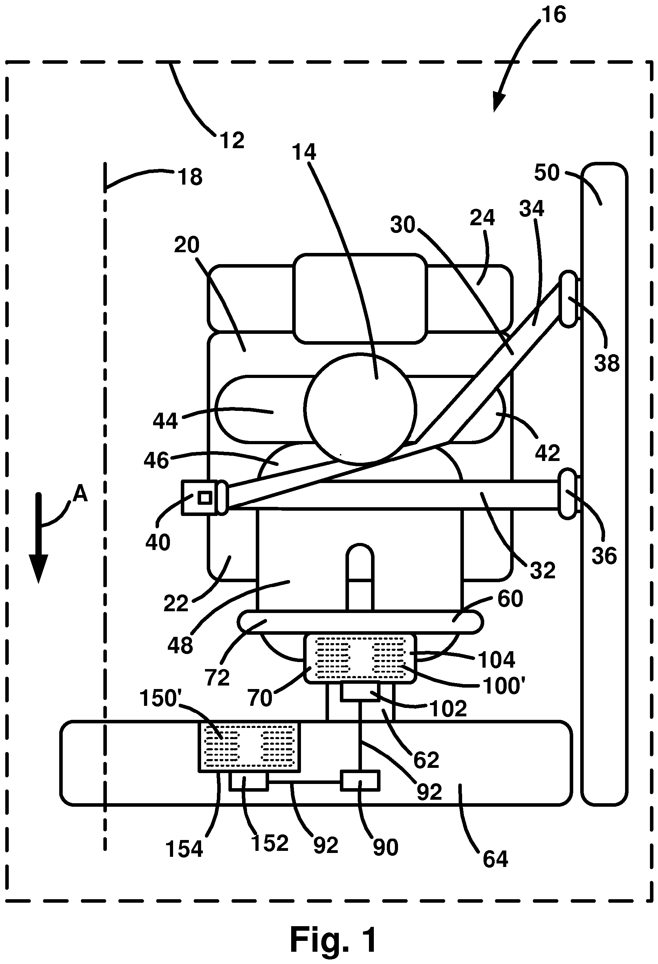

Referring to Fig. 1, a vehicle 12 includes a safety system 10 for helping to protect an occupant 14. More specifically, the system 10 helps protect an occupant 14 of a front seat 20 on a driver side 16 of the vehicle 12. The driver side 16 of the vehicle 12 is defined generally as the side of the vehicle from which a vehicle operator or driver controls or operates the vehicle. In the illustrations of Figs. 1-4, the driver side 16 is the side of the vehicle to the left of a vehicle centerline 18, as viewed from the perspective of the occupant 14 in a normally seated position (as shown) and looking in the direction of forward vehicle travel, as indicated generally by the arrow labeled A in Figs. 1-4. Those skilled in the art will appreciate that in some countries, such as England, the driver side of the vehicle can be opposite of that illustrated in Figs. 1-4. Those skilled in the art will further appreciate that all of the features of the system 10 described herein are equally applicable to vehicles having this "right side driver" configuration.

The vehicle seat 20 includes a seat base or bottom 22 and a seat back 24. The safety system 10 includes a seatbelt 30 for helping to restrain the occupant 14 in the seat 20. The seatbelt 30 includes a lap belt portion 32 and a shoulder belt portion 34. The seatbelt 30 has a first end connected to the vehicle 12 at an anchor point 36 located outboard of the vehicle seat bottom 22. The seatbelt 30 has an opposite second end connected to a retractor 38 connected to a side structure 50 of the vehicle, such as a B-pillar, at a location generally at or above an upper extent of the seat back 24.

Between the anchor point 36 and the D-ring/retractor 38, the seatbelt extends through a buckle 40 that is detachable anchored to the vehicle 12 on an inboard side of the seat bottom 22. The shoulder belt portion 34 extends from the retractor 38, over the occupant's outboard shoulder 42, and across the torso 44 to the buckle 40 located in the region adjacent the occupant's hip 46. The lap belt portion 32 extends from the buckle 40, across the occupant's lap, i.e., the hips 46 and legs 48, to the anchor point 36.

The vehicle 12 includes a steering wheel 60 that is connected to a steering column 62 extending from an instrument panel 64 of the vehicle. The steering wheel 60 includes a central hub 70 and a rim 72 that encircles the hub. The occupant 14 can grasp the rim 72 to manipulate the steering wheel 60 to steer the vehicle 12 in a known manner.

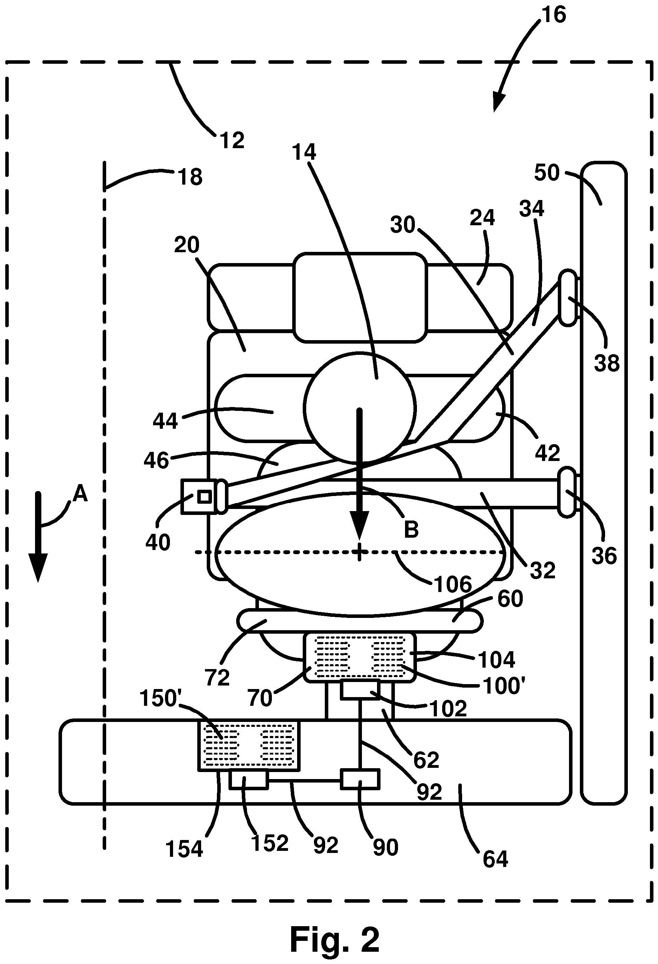

Referring to Figs. 1 and 2, the safety system 10 also includes a driver frontal air bag 100 that is mounted in a housing 104 formed in the steering wheel hub 70. The frontal air bag 100 has a stored condition, illustrated in dashed lines at 100' in Figs. 1 and 2, in which the air bag is folded, rolled, or otherwise placed within the housing 104 in the steering wheel hub 70. The frontal air bag 100 is inflatable from the stored condition (dashed lines at 100') to the deployed condition (solid lines at 100) as shown in Fig. 2. The safety system 10 includes an inflator 102 that is actuatable to produce inflation fluid for inflating the frontal air bag 100 in a known manner.

In the deployed condition, the frontal air bag 100 covers the steering wheel 60 and helps protect the occupant 14 from impacts with the steering wheel by cushioning impacts with the occupant and helping to provide a controlled deceleration or "ride down" effect. Because the steering wheel 60 is rotated during vehicle operation, the shape of the frontal air bag 100 is round (as viewed from the occupant's perspective) and generally centered on the steering wheel axis of rotation. This way, the frontal air bag 100 provides the same degree of coverage regardless of the rotational position of the steering wheel 60 at the time of deployment.

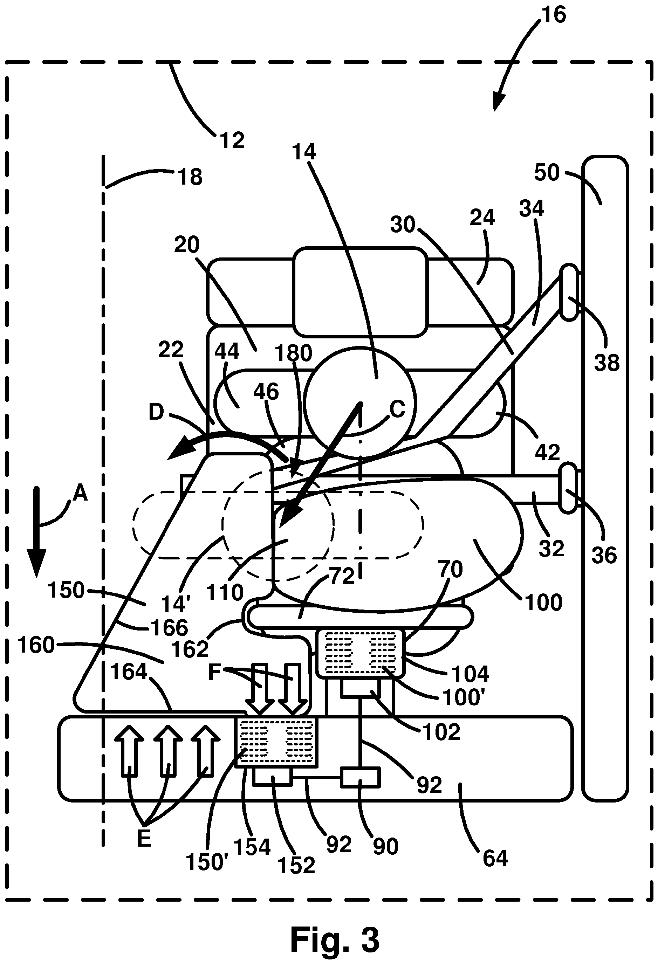

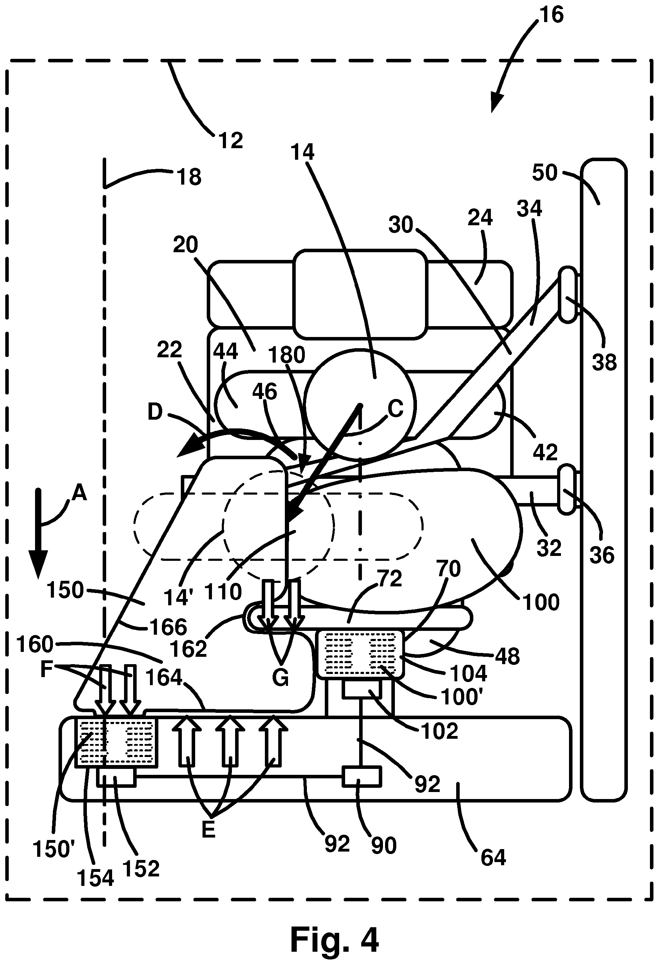

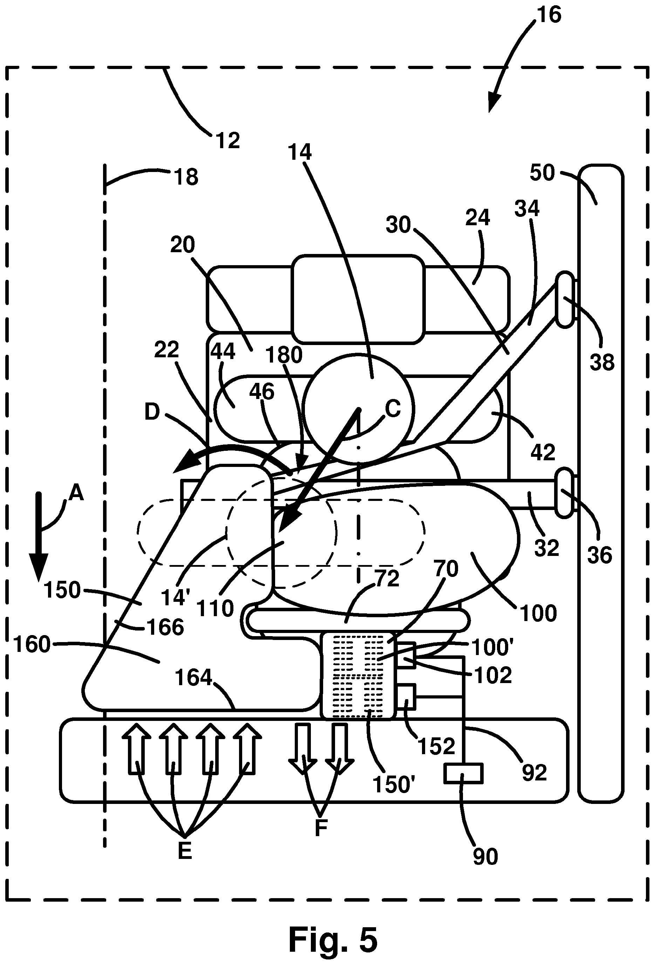

Referring to Figs. 1-5, the safety system 10 also includes a driver oblique air bag 150 that is mounted adjacent the steering wheel 60 in a housing 154 configured on or within a fixed, non-rotational structure in the vehicle 12, such as the instrument panel 64 (Figs. 3 and 4) or the steering column 62 (Fig. 5). The oblique air bag 150 has a stored condition, illustrated in dashed lines at 150' in Figs. 1-5, in which the air bag is folded, rolled, or otherwise placed within the housing 154 on the steering column/instrument panel. The oblique air bag 150 is inflatable from the stored condition (dashed lines at 150') to the deployed condition (solid lines at 150) as shown in Figs. 3 and 4. The safety system 10 includes an inflator 152 that is actuatable to produce inflation fluid for inflating the oblique air bag 150 in a known manner.

The safety system 10 also includes a sensor 90 for sensing the occurrence of an event for which deployment of the frontal air bag 100 and/or the oblique air bag 150 is desired. The sensor 90 monitors vehicle conditions, such as acceleration, in a known manner to detect the occurrence of an event, such as a vehicle impact caused by a collision with another vehicle or object, for which occupant protection is desired. Upon detecting the occurrence of such an event, the sensor 90 sends a signal to one or both of the inflators 102, 152 via lead wires 92. The inflators 102, 152, when actuated, operate in a known manner to produce inflation fluid that is directed into their respective air bags 100, 150, which causes the air bags to inflate to their respective deployed positions. The air bags 100, 150, when inflated and deployed, are positioned between the occupant 14 and structure of the vehicle 12, such as the steering wheel 60 and the instrument panel 64, and help protect the occupant from impacts with that structure.

There are many vehicle collision/impact scenarios for which the frontal air bag 100 and the oblique air bag 150 can help protect the vehicle occupant 14. For example, the frontal air bag 100 can help protect the occupant 14 if the vehicle 12 is involved in a frontal impact. A frontal impact is meant to refer to scenarios where the impact results in the occupant 14 moving forward in the vehicle 12 in a direction generally parallel to the vehicle centerline 18 and the direction of forward vehicle travel (see arrow A). In the event of a frontal impact, the occupant 14 moves forward in the vehicle 12 in a direction indicated generally by the arrow labeled B in Fig. 2 toward the steering wheel 60.

When a frontal impact occurs, the frontal air bag 100 can be sufficient to provide adequate protection to the occupant 14. Because the occupant 14 travels generally in the direction B toward the steering wheel 60, the occupant impacts the frontal air bag 100 squarely, moving substantially perpendicular to a lateral axis 106 of the frontal air bag. Because of this, the frontal air bag 100 receives and absorbs or dissipates the vast majority of the forces of the impacting occupant.

An oblique impact is meant to refer to scenarios where the impact results in the occupant 14 moving obliquely forward in the vehicle 12 in a direction that is non-parallel to the vehicle centerline 18 and the direction of forward vehicle travel (see arrow A). In the event of an oblique impact, the occupant 14 moves forward in the vehicle 12 in a direction that is angled either inboard of the vehicle (i.e., toward the vehicle centerline 18) or outboard of the vehicle (i.e., toward the vehicle side structure 50).

The frontal air bag 100 can help protect the occupant 14 in the event of an oblique impact, but not necessarily to the extent that it is able to help protect the occupant in a frontal impact. The degree to which the frontal air bag 100 can help protect the occupant 14 in an oblique impact depends on the degree to which the occupant movement deviates from the forward direction (see arrow A). As the degree to which the occupant movement deviates from the forward direction, i.e., as the angle increases, the ability of the frontal air bag 100 to help protect the occupant 14 also decreases. Thus, as the occupant movement becomes increasingly oblique, the frontal air bag's ability to help protect the occupant decreases.

Known safety systems can include features that help protect the occupant in the event of an oblique impact that causes the occupant 14 to move forward and outboard in the vehicle 12. For example, side impact air bags or curtain air bags, both of which are inflatable between the occupant 14 and the side structure 50, can help protect the occupant in the event of an oblique impact that moves them in the forward-outboard direction.

The oblique air bag 150 helps to address some unique challenges presented by oblique impacts that cause the occupant to move in a forward and inboard direction. Referring to Figs. 3-5, when a "forward-inboard" oblique collision occurs, the occupant 14 moves in a direction indicated generally by the arrow labeled "C" in Figs. 3-5. As a result, the occupant 14 moves toward the position indicated generally in dashed lines at 14' in Figs. 3-5. Of course, the oblique direction in which the occupant 14 moves, and their resulting position, can vary depending on the particulars of the impact event, such as the angle at which the vehicle 12 impacts another vehicle or object. Therefore, the oblique direction of occupant movement indicated by arrow C and the resulting position indicated at 14' is by way of example only.

Advantageously, the oblique air bag 150, both alone and in combination with the frontal air bag 100, helps protect the occupant 14 of a vehicle 12 involved in a forward-inboard oblique collision. The oblique air bag 150 is configured to cooperate with the architecture of the vehicle 12 in order to provide the bag with the structural integrity necessary to help protect the occupant. The forward-inboard oblique collision is unique in that the safety system 10 must react to and absorb or otherwise cushion both forward and inboard occupant movement. The frontal air bag 100 is not particularly adept at this function, as it is necessarily limited in width/radius owing to the fact that it is steering wheel mounted. Additionally, its rounded, oblong face presented toward the occupant 14 is more likely to cause the forward-inboard moving occupant slide or otherwise come off the frontal air bag 100. Further, the forward-inboard oblique collision presents the possibility that the occupant 14 can escape the shoulder belt portion 34 of the seatbelt 30.

The oblique air bag 150 can have a tapered, generally triangular or trapezoidal configuration when viewed from above as shown in Figs. 3-5. The oblique air bag 150 includes a portion that serves as a base or support leg 160 of the air bag, and a portion that serves as an occupant cushioning leg 170 of the air bag. The support leg 160 is positioned adjacent the instrument panel 64 and extends laterally from the housing 154 toward the vehicle centerline 18. In the example configuration illustrated in Figs. 3-5, the support leg 160 extends laterally beyond the vehicle centerline 18. This lateral extent of the support leg 160 could, however, vary.

As shown in Figs. 3-5, the configuration and position of the housing 154 and the configuration of the support leg 160 can also be selected so that the support leg is positioned "behind" the steering wheel rim 72, i.e., so that a portion of the support leg is positioned between the rim and the instrument panel 64. In the example configuration of Fig. 3, this is achieved by positioning the housing 154 in the instrument panel 64 in the proximity of the steering column 62. In the example configuration of Fig. 4, this is achieved by positioning the housing 154 at an inboard extend of the support leg 160 and extending the support leg outboard to behind the steering wheel rim 72. In the example configuration of Fig. 5, this is achieved by positioning the housing 154 in the steering column 62 itself. Because of this, the oblique air bag 150 can include a cutout portion 162 located at or about the interface between the support leg 160 and cushioning leg 170. The cutout portion 162 can receive or inflate around the steering wheel rim 72.

The cushioning leg 170 extends rearward in the vehicle 12 from the support leg 160. There is not necessarily a precise or set boundary between the support leg 160 and the cushioning leg 170. Instead, the identity of these air bag portions is determined more by how they perform or function in an oblique forward-inboard impact scenario. Generally speaking, the interface between the support leg 160 and the cushioning leg 170 is located in the region adjacent or near the cutout portion 162.

As their names imply, the support leg 160 provides support or a foundation for the cushion portion 170, which receives the impacting occupant 14. The tapered configuration of the oblique air bag 150 can be advantageous because the support leg 160 can contact a large area of the instrument panel 64 and thereby can provide a large reaction surface against which to support the cushioning leg 170. The cushioning leg 170, being tapered, has a width and depth sufficient to absorb the impacting occupant 14 while not so large as to overly increase the overall volume of the oblique air bag 150. Helping to avoid unnecessarily increasing the volume of the oblique air bag 150 can be an important factor not only to help limit or conserve the size of the inflator 152, but also for helping to ensure that inflation and deployment can take place in the extremely short time between the onset of the vehicle collision event and the impact of the occupant within the vehicle.

Additionally, due to the inclusion of the cutout portion 162, the oblique air bag 150 can extend around the steering wheel rim 72 so that the cushioning leg 170 overlies a portion of the rim. In doing so, the cushioning leg 160 can engage an inboard portion 110 of the frontal air bag 100. Through the configuration and sizing of the inflators 102, 152, the frontal and oblique air bags 100, 150 can be configured to inflate and pressurize so that they "press against" each other, as indicated generally by the distortion of the frontal air bag 100 in Figs. 3-5. This pressing against each other can be advantageous because, together, the frontal and oblique air bags 100, 150 form a cushioning structure that extends laterally across the steering wheel 60 toward the vehicle centerline 18, and rearward from the instrument panel 64 inboard of the vehicle seat 20 and the occupant 14 thereof, forming a pocket 180 for receiving the occupant 14 moving in the oblique direction C.

In the pocket 180, the combination of the oblique air bag 150 pressed against the frontal air bag 100 can help prevent the occupant 14 from passing between the bags and impacting vehicle structure, such as the steering wheel 60 or instrument panel 64. This can be particularly advantageous because the occupant 14 in an oblique impact can be travelling in the direction of arrow C toward the interface between the air bags 100, 150, and especially if the occupant escapes the shoulder belt portion 34 of the seatbelt 30. It is important to maintain this engagement between the air bags 100, 150 in order to maintain the integrity of the pocket 180 to help prevent the occupant 14 form passing between the bags.

The occupant 14 in a forward-inboard oblique impact will tend to move the cushioning leg 170 inboard toward the vehicle centerline 18. The oblique air bag 150 is pressurized when inflated and, as such, will tend to pivot or rotate somewhat as a whole about its connection to the vehicle 12 in an inboard direction in the vehicle. This pivotal/rotational movement of the oblique air bag 150 is indicated generally by the arrows labeled "D" in Figs. 3-5. Because this pivotal/rotational movement is contrary to maintaining engagement of the air bags 100, 150 and the integrity of the pocket 180, the safety system 10 is configured so that the oblique air bag 150 can resist this movement in response to the oblique impact event. This is due to both the configuration of the oblique air bag 150 itself and the manner in which the oblique air bag is connected or mounted in the vehicle 12.

During the oblique impact event, the connection of the oblique air bag 150 to the housing 154 and the positioning of the support leg 160 relative to the instrument panel 64 and steering wheel 60 provides the support that allows the oblique air bag to resist pivoting/rotating movement in the inboard direction indicated generally at D. Referring to Figs. 3-5, the tapered configuration of the oblique air bag 150 positions a long base wall 164 of the support leg 160 against the instrument panel 64, which acts as a reaction surface.

The support leg 160 acts as the interface between the oblique air bag 150 and the vehicle 12, serving to both maintain the connection of the air bag to the vehicle and to help maintain the air bag in the desired position relative to the vehicle and the vehicle occupant 14. The pivotal/rotational movement of the oblique air bag 150 (see arrow D) that the impacting occupant urges in response to an oblique impact creates two conditions at the air bag - instrument panel interface. First, a portion of the air bag will be urged or pressed against the instrument panel. Second, a portion of the air bag will be urged or pulled away from its connection to the vehicle 12, e.g., the instrument panel 64.

These conditions created by pivotal/rotational air bag movement necessitate a twofold response at the air bag - instrument panel interface. First, the oblique air bag 150 must be provided with a reaction surface for opposing its being urged or pressed against of the instrument panel 64. Second, the oblique air bag 150 must be provided with a retention structure for maintaining its connection to the vehicle and for resisting the its being urged to pull away from its connection with the vehicle 12.

Advantageously, the safety system 10 is configured so that the oblique can resist the conditions presented by the urging of the oblique air bag 150 to pivot/rotate in response to an impacting occupant in an oblique vehicle impact event. More specifically, the connection of the oblique air bag 150 in the vehicle, i.e., its being mounted via the housing 154, acts in combination with the reaction surface provided by the instrument panel 64 to help maintain the air bag in the desired position and orientation in the vehicle 12.

As the oblique air bag 150 is urged to pivot/rotate inboard in response to the impacting occupant 14, the base wall 164 is pressed against the instrument panel 64. The instrument panel 64 responds in a substantially equal and opposite manner, exerting a reaction force on the oblique air bag indicated generally by the arrows labeled "E" in Figs. 3-5. The instrument panel thus acts against the support leg 160 to resists the pivoting/rotating movement of the oblique air bag 150 by providing a large reaction surface for resisting the pivoting/rotating forces that are directed against it. Advantageously, the increased length of the support leg 160 provided by the tapered configuration of the oblique air bag 150 helps maximize or increase both the contact area with the instrument panel, thereby helping to maximize the force absorbing characteristics provided by the instrument panel reaction surface.

The taper of the oblique air bag 150 also provides some structural features. Specifically, the oblique air bag 150 includes an inboard tapered or angled wall 166 that helps improve the ability of the air bag to withstand and absorb the forces applied by the occupant 14 in an oblique impact scenario. In a pressurized fabric vessel, such as an air bag, the pressurization results in tension on the fabric. Thus, when the oblique air bag 150 of Figs. 3-5 is pressurized, the tapered wall 166 is tensioned. The wall 166, being tapered, lies on a plane or approximate plant that, while not necessarily being equal to, approximates or falls within a range of proximity to the angle or direction (see arrow C) at which the occupant 14 can impact the air bag in response to an oblique collision. The angle at which the occupant 14 approaches the cushioning leg 170 can be parallel to or within a certain angular range of being parallel to the angled wall 166.

Since the angled wall 166 is tensioned under the inflation pressure of the oblique air bag 150, it acts as a beam and is stronger in compression than in tension. Thus, the angled wall 166 specifically, and the support and cushioning legs 160, 170 generally, have a degree of strength or resistance to deformation that increases as the angle or direction at which the occupant 14 impacts the cushioning leg approaches being parallel to the angled wall 166. The occupant 14 impacting the cushioning leg 170 in the forward-inboard oblique impact event acts on the angled wall 166 in a direction that is within a certain degree of parallel to the plane of the angled wall. This helps the oblique air bag 150 to resist pivoting/rotating in response to the impacting occupant so that the air bag can maximize the degree to which it helps absorb the impact and cushion the occupant.

The manner in which the oblique air bag 150 is connected to the vehicle 12, i.e., the configuration and arrangement of the housing 64, can help determine how the air bag responds to an impacting occupant 14 in an oblique impact event. Therefore, the different configurations of the safety system 10 illustrated in Figs. 3-5, all of which resist pivoting/rotating movement of the oblique air bag 150, do so in slightly different manners.

Referring now to the example configuration of Fig. 3, the connection of the oblique air bag 150 to the vehicle is facilitated by the housing 154, which is located on the instrument panel 64 adjacent or near the steering column 62. In response to the pivotal/rotational movement of the oblique air bag 150 (arrow D) produced by the oblique impacting occupant 14 (arrow C), this connection exerts a retention force on the air bag, as indicated generally by the arrows labeled "F" in Fig. 3. The retention force resists the tendency of the support leg 160 oblique air bag 150 from "pulling away" from the instrument panel 64. Simultaneously, the support leg 160 engages the instrument panel 64, which acts as a reaction surface (arrows E) for supporting the air bag 150. The oblique air bag 150, maintained in the desired deployed position and bolstered structurally by its tapered configuration, can help absorb and distribute impact forces exerted by the occupant 14 in order to cushion the impact and provide a desired ride down effect.

Referring now to the example configuration of Fig. 4, the connection of the oblique air bag 150 to the vehicle is facilitated by the housing 154, which is located on the instrument panel 64 at a location spaced away from the steering column 62. In response to the pivotal/rotational movement of the oblique air bag 150 (arrow D) produced by the oblique impacting occupant 14 (arrow C), this connection helps to exert a retention force on the air bag, as indicated generally by the arrows labeled "F" in Fig. 4. In this configuration, these retention forces are not as strong (compared to the configuration of Fig. 3) due to the position of the housing 154 being spaced from the steering column 62. This is accounted for, however, by the cutout portion 154, which is configured to extend around and grasp onto the steering wheel rim 72. The steering wheel rim 72 thus helps to exert a retention force on the air bag, as indicated generally by the arrows labeled "G" in Fig. 4. These retention forces resist the tendency of the support leg 160 oblique air bag 150 from "pulling away" from the instrument panel 64.

In addition to these retention forces, in the configuration of Fig. 4, the support leg 160 engages the instrument panel 64, which acts as a reaction surface (arrows E) for supporting the air bag 150. The portion of the air bag 150 in the area of the housing 154 can also act as a reaction surface. The oblique air bag 150, maintained in the desired deployed position and bolstered structurally by its tapered configuration, can help absorb and distribute impact forces exerted by the occupant 14 in order to cushion the impact and provide a desired ride down effect.

Referring now to the example configuration of Fig. 5, the connection of the oblique air bag 150 to the vehicle is facilitated by the housing 154, which is located on the steering column 62. In response to the pivotal/rotational movement of the oblique air bag 150 (arrow D) produced by the oblique impacting occupant 14 (arrow C), this connection exerts a retention force on the air bag, as indicated generally by the arrows labeled "F" in Fig. 5. The retention force resists the tendency of the support leg 160 oblique air bag 150 from "pulling away" from the instrument panel 64. Simultaneously, the support leg 160 engages the instrument panel 64, which acts as a reaction surface (arrows E) for supporting the air bag 150. The oblique air bag 150, maintained in the desired deployed position and bolstered structurally by its tapered configuration, can help absorb and distribute impact forces exerted by the occupant 14 in order to cushion the impact and provide a desired ride down effect.

Upon the occurrence of an event for which occupant protection occurs, such as a vehicle collision or impact, the sensor 90 responds based on the sensed data collected for the event. From this data, the sensor can "decide" which, if any, of the protection devices of the safety system 10 to actuate. In regard to frontal and oblique collisions, the sensor 90 decides whether to actuate the frontal air bag 100 only or both the frontal and oblique air bag 150 together.

For example, the sensor 90 can be outfitted with accelerometers for measuring both longitudinal and lateral vehicle accelerations. A purely longitudinal vehicle acceleration of a predetermined magnitude can be considered indicative of a frontal impact. A purely lateral vehicle acceleration of a predetermined magnitude can be considered indicative of a side impact. Vehicle accelerations of a predetermined magnitude in both longitudinal and lateral directions can be considered indicative of an oblique vehicle collision. If the sensor 90 senses the occurrence of a vehicle impact event that is frontal or primarily frontal within some predetermined range or threshold, then it can trigger actuation of the frontal air bag 100 only. If the sensor 90 senses the occurrence of a vehicle impact event that is oblique, then it can trigger actuation of the both the frontal air bag 100 and the oblique air bag 150.

From the above description of the invention, those skilled in the art will perceive applications, improvements, changes and modifications to the invention. Such applications, improvements, changes and modifications within the skill of the art are intended to be covered by the appended claims.

## Claims

1. A vehicle safety system (10) comprising:
an oblique air bag (150) configured to be mounted at a mounting location in the vehicle (12), the oblique air bag (150) being configured to be inflated between an instrument panel (64) of the vehicle (12) and an occupant (14) of a front driver side seat (20) of the vehicle (12), the oblique air bag (150) comprising:
a support leg (160) that extends away from the mounting location along the instrument panel (64); and
an occupant cushioning leg (170) configured to extend rearward in the vehicle (12) from the support leg (160) on an inboard side of the vehicle steering wheel (60), the cushioning leg (170) extending adjacent a steering wheel (60) mounted frontal air bag (100) and extending rearward in the vehicle (12) beyond the rearward extent of the frontal air bag (100);
**characterized in, that** the oblique air bag (150) is configured to resist inboard rotation in response to occupant (14) impacts in an oblique direction (C);
wherein the positioning of the support leg (160), having a portion positioned behind a steering wheel (60) of the vehicle (12) such that a portion of the support leg (160) is positioned between the steering wheel rim (72) and the instrument panel (64), provides the support that allows the oblique air bag (150) to resist rotating movement in the inboard direction.

2. The vehicle safety system (10) recited in claim 1, wherein the cushioning leg (170) engages an inboard positioned portion of the frontal air bag (100).

3. The vehicle safety system (10) recited in claim 2, wherein the cushioning leg (170) is configured to distort the portion of the frontal air bag (100) with which it engages and move the portion of the frontal air bag (100) with which it engages in an outboard direction.

4. The vehicle safety system (10) recited in claim 1, wherein the oblique air bag (150) and the frontal air bag (100) are configured to exert forces against each other so as to form a contiguous inflated body extending across the steering wheel (60) and inboard of the steering wheel (60) rearward in the vehicle (12) adjacent the front driver side seat (20).

5. The vehicle safety system (10) recited in claim 1, wherein the oblique air bag (150) and the frontal air bag (100) are configured to form a contiguous inflated body extending across the steering wheel (60) and inboard of the steering wheel (60) rearward in the vehicle (12) adjacent the front driver side seat (20), with the steering wheel (60) and the instrument panel (64) in combination forming a reaction surface across their lateral extents in the vehicle (12).

6. The vehicle safety system (10) recited in claim 1, wherein the cushioning leg (170) is configured to extend rearward of the frontal air bag (100) and to engage the frontal air bag (100) so as to form a pocket (180) for receiving the occupant (14).

7. The vehicle safety system (10) recited in claim 1, wherein the cushioning leg (170) has a tapered configuration with a wide base portion configured to be positioned proximate the instrument panel (64), the width of the cushioning leg (170) narrowing as it extends rearward of the instrument panel (64).

8. The vehicle safety system (10) recited in claim 1, wherein the cushioning leg (170) has an outboard wall presented toward the driver seat (20) and an inboard wall (166) presented away from the driver seat (20), wherein the inboard wall (166) extends diagonally away from the instrument panel (64) in a direction that is rearward in the vehicle (12) and outboard of the vehicle so as to converge with the outboard wall.'

9. The vehicle safety system (10) recited in claim 1, wherein the cushioning leg (170) comprises an inboard wall presented away from the driver seat (20) occupant (14), the inboard wall (166) extending from adjacent the instrument panel (64) rearward in the vehicle and at an angle directed outboard of the driver side (16) of the vehicle (12), wherein the inboard wall (166) is configured to become rigid when the air bag (150) is inflated so as to resist inboard pivotal/rotational movement of the cushioning leg (180) in response to an occupant (14) impacting the cushioning leg (170).

10. The vehicle safety system (10) recited in claim 1, wherein the mounting location is in the instrument panel (64) adjacent a steering column (62) of the vehicle (12), the support leg (160) of the oblique air bag (150) extending away from the mounting location toward a longitudinal centerline (18) of the vehicle (12).

11. The vehicle safety system (10) recited in claim 1, wherein the mounting location is on a steering column (62) of the vehicle (12), the support leg (160) of the oblique air bag (150) extending away from the mounting location toward a longitudinal centerline (18) of the vehicle (12).

12. The vehicle safety system (10) recited in claim 1, further comprising a housing (154) for mounting the oblique air bag (150) in the vehicle (12), the housing (154) being configured to fix a first end portion of the support leg (160) to the vehicle (12), the support leg (160) being configured to extend away from the housing (154) along the instrument panel (64) so that the housing (154) anchors the oblique air bag (150) to the vehicle (12) and the instrument panel (64) forms a reaction surface that blocks inboard rotation of the oblique air bag (150) in response to occupant (14) impacts in an oblique direction (C).

13. The vehicle safety system (10) recited in claim 1, wherein the oblique air bag (150) comprises a notch (162) configured to receive a steering wheel rim (72) portion of the steering wheel (60).

14. The vehicle safety system (10) recited in claim 13, wherein the notch (162) is configured to use the steering wheel (60) as a reaction surface for supporting the oblique air bag (150) against impact forces with the oblique air bag (150).

## Patentansprüche

1. Fahrzeugsicherheitssystem (10) mit:
einem schrägen Airbag (150), der zum Anbringen an einer Befestigungsstelle in dem Fahrzeug (12) konfiguriert ist, wobei der schräge Airbag (150) zum Aufblasen zwischen einem Armaturenbrett (64) des Fahrzeuges (12) und einem Insassen (14) eines fahrerseitigen Vordersitzes (20) des Fahrzeuges (12) konfiguriert ist, wobei der schräge Airbag (150) Folgendes umfasst:
einen Stützschenkel (160), der sich von der Befestigungsstelle weg entlang des Armaturenbretts (64) erstreckt; und
einen Insassendämpfungsschenkel (170), der so konfiguriert ist, dass er sich in dem Fahrzeug (12) nach hinten von dem Stützschenkel (160) auf einer Innenseite des Fahrzeuglenkrades (60) erstreckt, wobei sich der Dämpfungsschenkel (170) angrenzend an einen an dem Lenkrad (60) montierten Frontairbag (100) erstreckt und sich in dem Fahrzeug (12) nach hinten über den rückwärtigen Bereich des Frontairbags (100) hinaus erstreckt;
**dadurch gekennzeichnet, dass** der schräge Airbag (150) derart ausgebildet ist, dass er einer Innendrehung in Abhängigkeit eines Aufpralls eines Insassen (14) in eine schräge Richtung (C) standhält;
wobei die Positionierung des Stützschenkels (160) mit einem Abschnitt, welcher hinter einem Lenkrad (60) des Fahrzeuges (12) derart positioniert ist, dass ein Abschnitt des Stützschenkels (160) zwischen dem Lenkradkranz (72) und dem Armaturenbrett (64) positioniert ist, die Abstützung bereitstellt, die es dem schrägen Airbag (150) ermöglicht, einer Drehbewegung in Richtung nach innen standzuhalten.

2. Fahrzeugsicherheitssystem (10) nach Anspruch 1, wobei der Dämpfungsschenkel (170) in einen innen positionierten Abschnitt der Frontairbags (100) eingreift.

3. Fahrzeugsicherheitssystem (10) nach Anspruch 2, wobei der Dämpfungsschenkel (170) zum Verdrehen des Abschnittes des Frontairbags (100) ausgebildet ist, mit dem er in den Abschnitt des Frontairbags (100) eingreift und diesen bewegt, wobei er in diesen in eine Richtung nach außen eingreift.

4. Fahrzeugsicherheitssystem (10) nach Anspruch 1, wobei der schräge Airbag (150) und der Frontairbag (100) zum Ausüben von Kräften gegeneinander ausgebildet sind, um einen zusammenhängenden aufgeblasenen Körper zu bilden, der sich über das Lenkrad (60) und innerhalb des Lenkrades (60) nach hinten in dem Fahrzeug (12) angrenzend an den fahrerseitigen Vordersitz (20) erstreckt.

5. Fahrzeugsicherheitssystem (10) nach Anspruch 1, wobei der schräge Airbag (150) und der Frontairbag (100) zur Bildung eines zusammenhängenden aufgeblasenen Körpers ausgebildet sind, der sich über das Lenkrad (60) und an der Innenseite des Lenkrades (60) nach hinten in dem Fahrzeug (12) angrenzend an den fahrerseitigen Vordersitz (20) erstreckt, wobei das Lenkrad (60) und das Armaturenbrett (64) kombiniert eine Reaktionsfläche über ihre seitlichen Bereiche in dem Fahrzeug (12) bilden.

6. Fahrzeugsicherheitssystem (10) nach Anspruch 1, wobei der Dämpfungsschenkel (170) so ausgebildet ist, dass er sich hinter dem Frontairbag (100) erstreckt und in den Frontairbag (100) eingreift, so dass er eine Tasche (180) zum Aufnehmen des Insassen (14) bildet.

7. Fahrzeugsicherheitssystem (10) nach Anspruch 1, wobei der Dämpfungsschenkel (170) eine verjüngte Gestalt mit einem breiten Grundabschnitt aufweist, der zur Positionierung in der Nähe des Armaturenbretts (64) ausgebildet ist, wobei sich die Breite des Dämpfungsschenkels (170) verjüngt, wenn er sich hinter dem Armaturenbrett (64) erstreckt.

8. Fahrzeugsicherheitssystem (10) nach Anspruch 1, wobei der Dämpfungsschenkel (170) eine in Richtung des Fahrersitzes (20) gerichtete Außenwand und eine von dem Fahrersitz (20) weg gerichtete Innenwand (166) aufweist, wobei die Innenwand (166) diagonal von dem Armaturenbrett (64) weg in eine Richtung verläuft, die in dem Fahrzeug (12) hinten und außerhalb des Fahrzeuges ist, so dass sie mit der Außenwand zusammenzutrifft.

9. Fahrzeugsicherheitssystem (10) nach Anspruch 1, wobei der Dämpfungsschenkel (170) eine von dem Insassen (14) auf dem Fahrersitz (20) weg gerichtete Innenwand umfasst, wobei die Innenwand (166) von angrenzend an das Armaturenbrett (64) nach hinten in dem Fahrzeug und in einem nach außen von der Fahrerseite (16) des Fahrzeuges (12) gerichteten Winkel verläuft, wobei die Innenwand (166) derart ausgeführt ist, dass sie sich versteift, wenn der Airbag (150) aufgeblasen wird, um einer Schwenk-/Drehbewegung des Dämpfungsschenkels (180) nach innen in Abhängigkeit eines auf den Dämpfungsschenkel (170) auftreffenden Insassen (14) standzuhalten.

10. Fahrzeugsicherheitssystem (10) nach Anspruch 1, wobei die Befestigungsstelle in dem Armaturenbrett (64) an eine Lenksäule (62) des Fahrzeuges (12) angrenzt, wobei sich der Stützschenkel (160) des schrägen Airbags (150) von der Befestigungsstelle in Richtung einer Längsmittellinie (18) des Fahrzeuges (12) erstreckt.

11. Fahrzeugsicherheitssystem (10), wobei sich die Befestigungsstelle an einer Lenksäule (62) des Fahrzeuges (12) befindet, wobei der Stützschenkel (160) des schrägen Airbags (150) von der Befestigungsstelle weg in Richtung einer Längsmittellinie (18) des Fahrzeuges (12) verläuft.

12. Fahrzeugsicherheitssystem (10) nach Anspruch 1, weiterhin mit einem Gehäuse (154) zum Anbringen des schrägen Airbags (150) in dem Fahrzeug (12), wobei das Gehäuse (154) dazu ausgeführt ist, einen ersten Endabschnitt des Stützschenkels (160) an dem Fahrzeug (12) zu befestigen, wobei der Stützschenkel (160) so ausgeführt ist, dass er sich von dem Gehäuse (154) weg entlang des Armaturenbretts (64) derart erstreckt, dass das Gehäuse (154) den schrägen Airbag (150) an dem Fahrzeug (12) verankert und das Armaturenbrett (64) eine Reaktionsfläche bildet, die eine Innendrehung des schrägen Airbags (150) in Abhängigkeit eines Aufpralls des Insassen (14) in schräger Richtung (C) verhindert.

13. Fahrzeugsicherheitssystem (10) nach Anspruch 1, wobei der schräge Airbag (150) eine Einkerbung (162) umfasst, die zum Aufnehmen eines Abschnittes eines Lenkradkranzes (72) des Lenkrades (60) ausgebildet ist.

14. Fahrzeugsicherheitssystem (10) nach Anspruch 13, wobei die Einkerbung (162) zur Verwendung des Lenkrades (60) als Reaktionsfläche zum Abstützen des schrägen Airbags (150) gegen Aufprallkräfte auf den schrägen Airbag (150) ausgebildet ist.

## Revendications

1. Un système de sécurité pour véhicule (10) comprenant :
un sac gonflable oblique (150) configuré pour être monté à un emplacement de montage dans le véhicule (12), le sac gonflable oblique (150) étant configuré pour être gonflé entre un tableau de bord (64) du véhicule (12) et un occupant (14) du siège avant conducteur (20) du véhicule (12), le sac gonflable oblique (150) comprenant :
une jambe de soutien (160) qui s'étend depuis l'emplacement de montage le long du tableau de bord (64); et
une jambe d'amorti d'occupant (170) configurée pour se prolonger vers l'arrière dans le véhicule (12) à partir de la jambe de soutien (160) sur un côté intérieur du volant de direction du véhicule (60), la jambe d'amorti (170) s'étendant à côté sac gonflable frontal (100) monté dans un volant de direction (60) et s'étendant vers l'arrière dans le véhicule (12) au-delà de l'étendue arrière du sac gonflable frontal (100);
**caractérisé en ce que**, le sac gonflable oblique (150) est configuré pour résister à la rotation vers l'intérieur en réponse aux impacts de l'occupant (14) dans une direction oblique (C);
pour lequel le positionnement de la jambe de soutien (1 60), ayant une partie placée derrière un volant de direction (60) du véhicule (12) de sorte qu'une partie de la jambe de soutien (160) soit positionnée entre la jante du volant (72) et le tableau de bord (64), fournit le support qui permet au sac gonflable oblique (150) de résister au mouvement rotatif dans la direction vers l'intérieur.

2. Système de sécurité de véhicule (10) selon la revendication 1, pour lequel la jambe d'amorti (170) engage une partie positionnée à l'intérieur du sac gonflable frontal (100).

3. Système de sécurité de véhicule (10) selon la revendication 2, pour lequel la jambe d'amorti (170) est configurée pour déformer la partie du sac gonflable frontal (100) avec laquelle il s'engage et déplacer la partie du sac gonflable frontal (100) avec laquelle il s'engage dans une direction extérieure.

4. Système de sécurité de véhicule (10) selon la revendication 1, pour lequel le sac gonflable oblique (150) et le sac gonflable frontal (100) sont configurés pour exercer des forces s'opposant les unes contre les autres afin de former un corps gonflé contigu s'étendant sur le volant (60) et à l'intérieur du volant (60) vers l'arrière dans le véhicule (12) adjacent au siège avant du côté conducteur (20).

5. Système de sécurité de véhicule (10) selon la revendication 1, pour lequel le sac gonflable oblique (150) et le sac gonflable frontal (100) sont configurés pour former un corps gonflé contigu s'étendant sur le volant de direction (60) et à l'intérieur du volant (60) vers l'arrière dans le véhicule (12) adjacent au siège avant du côté conducteur (20), avec le volant de direction (60) et le tableau de bord (64) en combinaison formant une surface de réaction à travers leurs étendues latérales dans le véhicule (12).

6. Système de sécurité de véhicule (10) selon la revendication 1, pour lequel la jambe d'amorti (170) est configurée pour s'étendre vers l'arrière du sac gonflable frontal (100) et pour engager le sac gonflable frontal (100) de manière à former une poche (180) pour recevoir l'occupant (14).

7. Système de sécurité de véhicule (10) selon la revendication 1, pour lequel la jambe d'amorti (170) a une configuration profilée avec une partie de base large configurée pour être positionnée à proximité du tableau de bord (64), la largeur de la jambe d'amorti (170) se rétrécissant alors qu'elle s'étend vers l'arrière du tableau de bord (64).

8. Système de sécurité de véhicule (10) selon la revendication 1, pour lequel la jambe d'amorti (170) a une paroi extérieure située en direction du siège conducteur (20) et une paroi intérieure (166) située loin du siège conducteur (20), pour lequel la paroi intérieure (166) s'étend en diagonale depuis le tableau de bord (64) dans une direction qui est vers l'arrière du véhicule (12) et extérieure du véhicule afin de converger avec la paroi extérieure.

9. Système de sécurité de véhicule (10) selon la revendication 1, pour lequel la jambe d'amorti (170) comprend une paroi intérieure située loin du siège conducteur (20) occupant (14), la paroi intérieure (166) s'étendant à partir du tableau de bord (64) adjacente vers l'arrière du véhicule et avec un angle dirigé vers l'extérieur du côté conducteur (16) du véhicule (12), pour lequel la paroi intérieure (166) est configurée pour devenir rigide lorsque le sac gonflable (150) est gonflé de manière à résister au mouvement pivot/ de rotation intérieur de la jambe d'amortissement (180) en réponse à un occupant (14) impactant la jambe d'amorti (170).

10. Système de sécurité de véhicule (10) selon la revendication 1, pour lequel l'emplacement de montage se trouve dans le tableau de bord (64) adjacent à une colonne de direction (62) du véhicule (12), la jambe de soutien (160) du sac gonflable oblique (150) s'étendant loin de l'emplacement de montage vers un ligne médiane longitudinale (18) du véhicule (12).

11. Système de sécurité de véhicule (10) selon la revendication 1, pour lequel l'emplacement de montage se trouve sur une colonne de direction (62) du véhicule (12), la jambe de soutien (160) du sac gonflable oblique (150) s'étendant de l'emplacement de montage vers une ligne médiane longitudinale (18) du véhicule (12).

12. Système de sécurité de véhicule (10) selon la revendication 1,comprenant un boitier (154) pour le montage du sac gonflable oblique (150) dans le véhicule (12), le boîtier (154) étant configuré pour fixer une première partie de la jambe de soutien (160) au véhicule (12), la jambe de soutien (160) étant configurée pour s'étendre loin du boitier (154) le long du tableau de bord (64) de sorte que le boîtier (154) ancre le sac gonflable oblique (150) au véhicule (12) et que le tableau de bord (64) forme une surface de réaction qui bloque la rotation intérieure du sac gonflable oblique (150) en réponse aux impacts de l'occupant (14) dans un direction oblique (C).

13. Système de sécurité du véhicule (10) selon la revendication 1, pour lequel le sac gonflable oblique (150) comprend une encoche (162) configurée pour recevoir une jante de volant (72) qui fait partie du volant de direction (60).

14. Système de sécurité du véhicule (10) selon la revendication 13, pour lequel l'encoche (162) est configurée pour utiliser le volant de direction (60) comme surface de réaction pour soutenir le sac gonflable oblique (150) contre les forces d'impact avec le sac gonflable oblique (150).
